# EUROPEAN PATENT APPLICATION

(11) **EP 3 370 217 A1**
(43) Date of publication of application: **05.09.2018**
(21) Application number: 18156291.9
(22) Date of filing: 12.02.2018
(51) Int. Cl.: G08G 1/0968, G01C 21/34

(54) **DESTINATION-LESS TRAVEL SYSTEM FOR AN AUTOMATED-VEHICLE**

(30) Priority: 01.03.2017 US 201715446490
(71) Applicant: Delphi Technologies LLC, Troy, MI 48007 (US)
(72) Inventor: LAUR, Michael H, MISSION VIEJO, CALIFORNIA 92692 (US); VIJAYAN, Indu, SUNNYVALE, CALIFORNIA 94086 (US)
(74) Representative: Robert, Vincent

(57) **Abstract**

A destination-less travel system (10) for an automated-vehicle includes a digital-map (24) and a controller (30). The digital-map (24) indicates route-options (22) for a host-vehicle (12). The controller (30) is in communication with the digital-map (24) and an operator (18) of the host-vehicle (12). The controller (30) queries (34) the operator (18) regarding the route-options (22) when no destination has been specified and the host-vehicle (12) approaches a decision-point (40) on a roadway traveled by the host-vehicle (12).

## Description

### TECHNICAL FIELD OF INVENTION

This disclosure generally relates to a destination-less travel system that queries the operator regarding the route-options when no destination has been specified and the host-vehicle approaches a decision-point on a roadway traveled by the host-vehicle.

### BACKGROUND OF INVENTION

In some instances, an operator of an automated vehicle may not have a particular destination in mind. For example, the operator may simply want to go for a 'Sunday ride'. However, without a specified destination, present navigation systems merely display where on a digital map the vehicle is located.

### SUMMARY OF THE INVENTION

In accordance with one embodiment, a destination-less travel system for an automated-vehicle is provided. The system includes a digital-map and a controller. The digital-map indicates route-options for a host-vehicle. The controller is in communication with the digital-map and an operator of the host-vehicle. The controller queries the operator regarding the route-options when no destination has been specified and the host-vehicle approaches a decision-point on a roadway traveled by the host-vehicle.

The controller may be configured to select a route that is characterized as continuing straight on the roadway traveled by the host-vehicle, and the decision-point is where continuing straight on the roadway is not one of the route-options. The decision-point may be characterized as where the roadway ends at a T-shaped intersection. The decision-point may be characterized as where the route-options include a first route-option that passes through a city and a second route-option that bypasses the city. The decision-point may be characterized as where an identification-number of the roadway changes. The decision-point may be characterized as where a traffic-obstruction has been reported on a roadway traveled by the host-vehicle. The decision-point may be characterized as where historical traffic-flow problems have been reported on a roadway traveled by the host-vehicle. The controller may be configured to respond to a request by the operator to indicate a next-decision-point.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a diagram of a destination-less travel system in accordance with one embodiment; and
Fig. 2 is a conceptual illustration of a digital-map navigated by the system of Fig. 1 in accordance with one embodiment.

### DETAILED DESCRIPTION

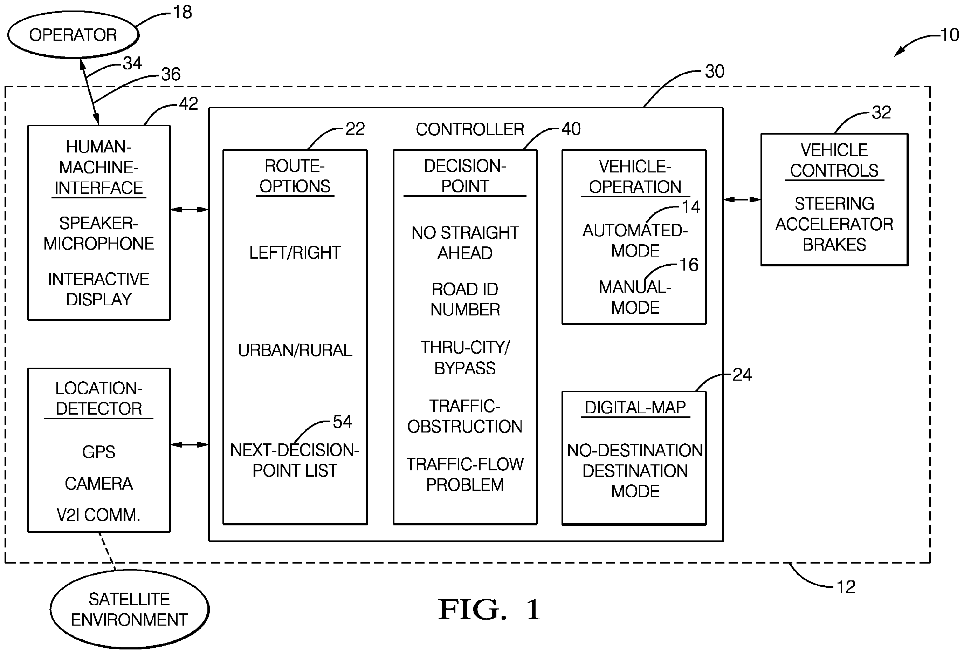

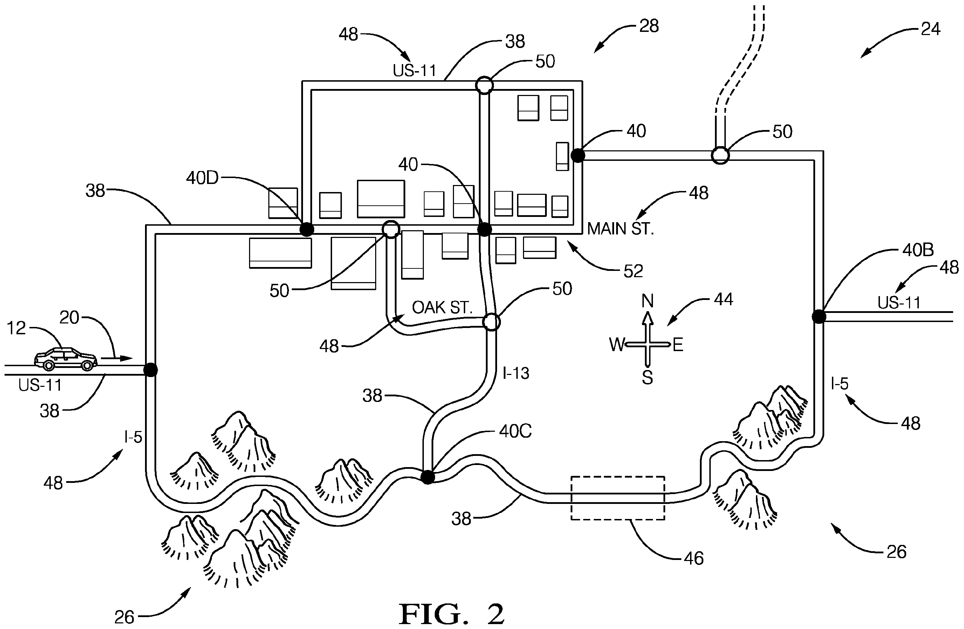

Fig. 1 illustrates a non-limiting example of a destination-less travel system 10, hereafter referred to as the system 10. The system 10 is well-suited for use by an automated-vehicle, e.g. a host-vehicle 12. As used herein, the term automated vehicle may apply to instances when the host-vehicle 12 is being operated in an automated-mode 14, i.e. a fully autonomous mode, where an operator 18 of the host-vehicle 12 may do little more than designate a travel-direction 20 (Fig. 2) in order to operate the host-vehicle 12. However, full automation is not a requirement. It is contemplated that the teachings presented herein are useful when the host-vehicle 12 is operated in a manual-mode 16 where the degree or level of automation may be little more than providing an audible or visual indications to the operator 18 who is generally in control of the steering, accelerator, and brakes of the host-vehicle 12. For example, the system 10 may merely assist the operator 18 as needed to select from a plurality of route-options 22. As will become apparent in the description that follows, the system 10 described herein is different from known navigation systems that provide route guidance to a specified destination as the system 10 described herein is designed to provide route-guidance advice when no destination has been specified.

The system includes a digital-map 24 that includes information about various roadways or routes so that the digital-map 24 can be used to indicate the route-options 22 for the host-vehicle 12. By way of example and not limitation, the digital-map 24 may include information such as instantaneous or historical traffic density, construction-zones, points-of-interest along the route, comments about the route from social media, temporary road closures, and the like. While the digital-map 24 in this non-limiting example is illustrated as being part of or within the host-vehicle 12, it is contemplated that the digital-map 24 may be stored remote from the host-vehicle 12, i.e. stored 'in the cloud', where it may be accessed via Wi-Fi, a cellular-phone network, satellite, or other modes of communication.

Fig. 2 illustrates a non-limiting conceptual example of a portion of the digital-map 24. Fig. 2 is characterized as conceptual as it is recognized that the data stored by the digital-map 24 is not in the form of an illustration similar to that shown. Some of the features shown on the digital-map 24 include, but are not limited to, a rural-area 26 where the route may be characterized as winding but expected to have relatively low traffic-density, and/or an urban-area 28 where the traffic-density may be relatively high because of the presence of numerous homes and businesses.

Returning now to Fig. 1, the system 10 includes a controller 30 in communication with at least the digital-map 24 and the operator 18 of the host-vehicle 12. The controller 30 may include a processor (not specifically shown) such as a microprocessor or other control circuitry such as analog and/or digital control circuitry including an application specific integrated circuit (ASIC) for processing data as should be evident to those in the art. The controller 30 may include memory (not specifically shown), including non-volatile memory, such as electrically erasable programmable read-only memory (EEPROM) for storing one or more routines, thresholds, and captured data. The one or more routines may be executed by the processor to perform steps for determining what is present or expected along a particular route based on signals received by the controller 30 from the digital-map 24, and optionally controlling the operation of the host-vehicle 12 based on instructions from the operator 18 and using vehicle-controls 32 as described herein.

As mentioned above, the system 10 is distinct from other navigation systems because the controller 30 queries 34 (i.e. - questions or interrogates) the operator 18 regarding the route-options 22 when no destination has been specified and the host-vehicle 12 approaches (e.g. is less than 1km away from) a decision-point 40 (see also Fig. 2) on a roadway 38 traveled by the host-vehicle 12. Queries 34 to the operator 18 and responses 36 from the operator 18 may be by way of a human-machine-interface 42 (HMI 42) such as, but not limited to, a speaker to emit the query 34 in the form of a question and a microphone to detect a spoken response by the operator 18, and/or an interactive display that displays the route-options 22 and associated information, where the interactive display is touch-sensitive or provides buttons or other means for the operator to indicate which of the route-options 22 is preferred. In the description that follows, various scenarios or situations are described as examples of what could be a decision-point 40. However, it should be recognized that this list is not exhaustive and other scenarios not presented are contemplated. The rules that determine where a decision-point 40 is located on the digital-map 24 may be many and varied, and may depend upon from which direction an intersection is approached.

In one non-limiting embodiment, the controller 30 may be configured to automatically select a route through an intersection that is characterized as continuing straight on the roadway 38 traveled by the host-vehicle 12 as not every intersection or fork in the roadway is necessarily a decision point. That is, an intersection may be a pass-through-point 50, and the determination that any intersection is classified as a decision-point 40 or a pass-through-point may change depending on the direction from which the intersection is approached. Otherwise the operator 18 could receive a query 34 at every intersection, which would likely be annoying to the operator 18.

The decision-point 40 may be an intersection where continuing straight on the roadway 38 is not one of the route-options 22 because the roadway 38 does not continue straight. Fig. 2 illustrates the host-vehicle 12 as approaching decision-point 40A from the west in accordance with the direction-indicator 44. The decision-point 40A is characterized as where the roadway 38 ends at or forms a T-shaped intersection, so continuing straight is not an option. The controller 30 may operate the HMI 42 to query 34 the operator 18 if simply a left-turn or a right-turn should be made, e.g. emit from the speaker - "Please indicate turn left or turn right." and/or display the query 34 on the interactive display. In response the operator 18 may speak the preferred turn direction, or press/touch the interactive display to indicate the preferred turn direction.

The query 34 may include additional information when the host-vehicle 12 arrives at or approaches the decision-point 40A such as noting that the route-options 22 include a first route-option (e.g. turn left) that passes through a city, e.g. the urban-area 28, and a second route-option (e.g. turn right) that bypasses the city and travels toward or through the rural-area 26. The additional information may include, but is not limited to, travel times to the decision-point 40B for each of the route-options 22, points-of-interest such as scenic sites in the rural-area 26, popular restaurants in the urban-area 28, or the presence of a construction-zone 46 or accident site (not shown) that may cause a temporary road closure on one or more of the route-options 22.

In another non-limiting embodiment the controller 30 may be configured to indicate a decision-point 40 where the digital-map 24 has an intersection where an identification-number 48 or the name of the roadway 38 changes if the straight-ahead route-option is taken. For example, if the host-vehicle 12 travels through the rural-area 26 on the 1-5 roadway and approaches the decision-point 40B from the south, 1-5 ends so going straight may not be the obvious straight-ahead route-choice, especially if the system 10 takes into consideration the prior eastbound travel on US-11 prior to reaching the decision-point 40A.

In another non-limiting embodiment the controller 30 may be configured to indicate a decision-point 40 where a traffic-obstruction 46 such as an accident-site or recent road-closure has been reported on a roadway traveled by the host-vehicle 12. For example, the host-vehicle 12 may be approaching from the west the intersection on 1-5 labeled as decision-point 40C. The intersection is designated as a decision-point 40 rather than a pass-through-point 50 because of the presence of the construction-zone 46. That is, if not for the presence of the traffic-obstruction 46, the intersection in this situation would likely be determined to be a pass-through-point 50 and the system 10 may automatically continue to travel east on 1-5 without issuing a query 34 to the operator 18.

In another non-limiting embodiment the controller 30 may be configured to indicate a decision-point 40 where historical traffic-flow problems 52 have been reported on a roadway 38 traveled by the host-vehicle 12. For example, the presence of numerous businesses and/or homes in the urban-area 28 may be the reason for the historical traffic-flow problems 52. The digital-map 24 may include this historical information and present it to the operator 18 as the host-vehicle approaches from the west the intersection labeled as the decision-point 40D. If the time of day (e.g. 3:00 am) were such that the historical traffic-flow problems 52 were not a problem, the system 10 may designate the intersection in question as a pass-through-point 50 so the host-vehicle 12 would continue east on Main Street instead of turning north on US-11 to bypass most of the businesses and/or homes in the urban-area 28.

The controller 30 may be configured respond to a request (verbal or by operating the interactive display) by the operator 18 to indicate or convey a next-decision-point 54 (Fig. 1). That is, the operator 18 may operate the system 10 to issue a query 34 well before (e.g. more than 1km away from) the location where the controller 30 would normally issue the query 34. It is contemplated that the operator 18 could continue to request additional decision-points based on the route-option 22 selected for the next-decision-point 54 so the route-options 22 are already selected for the next several instances of decision-points. This option to preselect the route-options 22 for a sequence of multiple instances of the decision-points 40 would allow the operator 18 travel undisturbed for a longer period of time and/or provide for a more pre-planned route of travel while still not designating a particular destination.

Numerous other forms of information may be conveyed to the operator 18 to facilitate selecting one of the route-options 22 at the decision-point 40. For example, the presence of a tunnel or long/high bridge on one of the route-options may be of interest to the operator 18 either because the operator 18 fears or relishes traveling through/over such structures. Another non-limiting example is when there are no services (food, gas, restroom) or exits for a long distance (e.g. more than 100km) on a route-option 22. Another non-limiting example is when one of the route-options 22 is a toll road. The operator 18 may want to avoid the expense, or may prefer the toll road because the condition of the roadway is better than the other route-options. Another non-limiting example is when cellular-phone service is unreliable along one of the route-options 22.

Accordingly, a destination-less travel system (the system 10), a controller 30 for the system 10, and a method of operating the system 10 is provided. The system 10 differs from prior navigation system as route-options are provided to the operator 18 on a 'decide-as-you-go' basis rather than just showing a location on a map or requiring that a destination be specified before route guidance is provided.

While this invention has been described in terms of the preferred embodiments thereof, it is not intended to be so limited, but rather only to the extent set forth in the claims that follow.

## Claims

1. A destination-less travel system (10) for an automated-vehicle, said system (10) comprising:
a digital-map (24) that indicates route-options (22) for a host-vehicle (12);
a controller (30) in communication with the digital-map (24) and an operator (18) of the host-vehicle (12), wherein the controller (30) queries (34) the operator (18) regarding the route-options (22) when no destination has been specified and the host-vehicle (12) approaches a decision-point (40) on a roadway (38) traveled by the host-vehicle (12).

2. The system (10) in accordance with claim 1, wherein the controller (30) is configured to select a route that is characterized as continuing straight on the roadway (38) traveled by the host-vehicle (12), and the decision-point (40) is where continuing straight on the roadway (38) is not one of the route-options (22).

3. The system (10) in accordance with claim 2, wherein the decision-point (40) is characterized as where the roadway (38) ends at a T-shaped intersection.

4. The system (10) according to any one of the preceding claims, wherein the decision-point (40) is characterized as where the route-options (22) include a first route-option (22) that passes through a city and a second route-option (22) that bypasses the city.

5. The system (10) according to any one of the preceding claims, wherein the decision-point (40) is characterized as where an identification-number (48) of the roadway (38) changes.

6. The system (10) according to any one of the preceding claims, wherein the decision-point (40) is characterized as where a traffic-obstruction (46) has been reported on a roadway (38) traveled by the host-vehicle (12).

7. The system (10) according to any one of the preceding claims, wherein the decision-point (40) is characterized as where historical traffic-flow problems (52) have been reported on a roadway (38) traveled by the host-vehicle (12).

8. The system (10) according to any one of the preceding claims, wherein the controller (30) is configured to respond to a request by the operator (18) to indicate a next-decision-point (54).
